(19) Europäisches Patentamt
European Patent Office
Office européen des brevets

(11) **EP 4 509 472 A1**

(12) **EUROPEAN PATENT APPLICATION**
published in accordance with Art. 153(4) EPC

(43) Date of publication:
**19.02.2025 Bulletin 2025/08**

(21) Application number: **23788328.5**

(22) Date of filing: **11.04.2023**

(51) International Patent Classification (IPC):
**C03B 5/235** (2006.01)

(52) Cooperative Patent Classification (CPC):
**C03B 5/235**

(86) International application number:
**PCT/JP2023/014675**

(87) International publication number:
**WO 2023/199910 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.04.2022 JP 2022067458**

(71) Applicant: **Nippon Electric Glass Co., Ltd.
Otsu-shi, Shiga 520-8639 (JP)**

(72) Inventors:
• **ASAI Kosuke**
  **Otsu-shi, Shiga 520-8639 (JP)**
• **ITAZU Hiroyuki**
  **Otsu-shi, Shiga 520-8639 (JP)**
• **TOKUNAGA Shingo**
  **Otsu-shi, Shiga 520-8639 (JP)**

(74) Representative: **Tetzner, Michael
Tetzner & Partner mbB
Patent- und Rechtsanwälte
Van-Gogh-Strasse 3
81479 München (DE)**

(54) **METHOD FOR MANUFACTURING GLASS ARTICLE**

(57)    Provided is a manufacturing method for a glass article, including a melting step of heating and melting glass raw materials in a melting furnace by using a burner (11) configured to burn fuel to form a flame (F). A hydrocarbon fuel and a hydrogen fuel are used in combination as the fuel. The melting step includes a step of adjusting a ratio of use between the hydrocarbon fuel and the hydrogen fuel.

Fig. 3

## Description

Technical Field

The present invention relates to a manufacturing method for a glass article.

Background Art

A manufacturing process for a glass article includes a melting step of heating and melting glass raw materials in a melting furnace. In the melting step, a method of heating and melting glass raw materials in a melting furnace by using a burner that burns fuel to form a flame has been widely used (for example, Patent Literature 1). As the fuel, a hydrocarbon fuel such as a natural gas fuel is generally used.

Citation List

Patent Literature 1: WO 2011/136086 A

Summary of Invention

Technical Problem

However, when the hydrocarbon fuel is used as the fuel to be supplied to the burner, $CO_2$ contained in an exhaust gas generated in the melting step increases. As a result, there arises a problem in that an environmental load increases.

The present invention has an object to reduce $CO_2$ contained in an exhaust gas generated in a melting step.

Solution to Problem

In order to solve the problem described above, the inventors of the present application have focused on a hydrogen fuel as fuel to be supplied to a burner. When the hydrogen fuel is burned with the burner to form a flame, water is generated as a main product. Thus, $CO_2$ contained in an exhaust gas can be significantly reduced. However, it is more difficult to obtain the hydrogen fuel than to obtain a hydrocarbon fuel. Thus, in general, it is difficult to continuously melt glass raw materials in a stable manner only with the hydrogen fuel.

(1) According to the present invention which has been devised in order to solve the problem described above, there is provided a manufacturing method for a glass article, comprising a melting step of heating and melting glass raw materials in a melting furnace by using a burner configured to burn fuel to form a flame. A hydrocarbon fuel and a hydrogen fuel are used in combination as the fuel.

In the above-mentioned manner, the hydrogen fuel is used as the fuel. Thus, the amount of $CO_2$ contained in the exhaust gas can be significantly reduced. Meanwhile, the hydrocarbon fuel is also used in the melting step. Thus, the amount of use of hydrogen fuel, which is more liable to be in short supply, can be reduced, enabling stable melting of the glass raw materials. Further, a viscosity of a molten glass decreases due to water generated along with combustion of the hydrogen fuel. Thus, meltability is improved, and glass can be molten at a lower temperature as compared to a case in which glass is molten using only the hydrocarbon fuel.

(2) In the configuration of the above-mentioned item (1), it is preferred that the melting step comprise a step of adjusting a ratio of use between the hydrocarbon fuel and the hydrogen fuel.

In the above-mentioned manner, even when, for example, the supply of the hydrocarbon fuel is tight, heating with the burner can be maintained by adjusting the ratio of use between the hydrocarbon fuel and the hydrogen fuel. That is, the glass raw materials can be continuously molten in a more stable manner. Thus, production efficiency of glass articles can be desirably maintained while $CO_2$ contained in the exhaust gas generated in the melting step is being reduced.

(3) In the configuration of the above-mentioned item (2), it is preferred that the melting step comprise adjusting a water amount in a molten glass generated by melting the glass raw materials, by adjusting the ratio of use between the hydrocarbon fuel and the hydrogen fuel.

As a result of intensive research, the inventors of the present application have found the following. When the ratio of use of the hydrocarbon fuel is increased, a water amount in the molten glass decreases. When the ratio of use of the hydrogen fuel is increased, the water amount in the molten glass increases. That is, the water amount in the molten glass can be appropriately adjusted by adjusting the ratio of use between the hydrocarbon fuel and the hydrogen fuel. The appropriate adjustment of the water amount in the molten glass as described above can suppress variations in the water amount in the molten glass, which may occur, for example, along with seasonal variation. Thus, glass articles of high quality can be manufactured.

(4) In the configuration of the above-mentioned item (2) or (3), it is preferred that the melting step comprise adjusting a water amount in the glass article generated by melting the glass raw materials, by adjusting the ratio of use between the hydrocarbon fuel and the hydrogen fuel.

In the above-mentioned manner, glass articles of high quality can be stably manufactured.

(5) In the configuration of any one of the above-mentioned items (1) to (4), it is preferred that the burner be supplied with oxygen as a combustion-supporting gas.

In the above-mentioned manner, the fuel becomes more easily combustible. Hence, a temperature of the flame formed by the burner is more easily increased, and the water amount in the molten glass can be increased.

(6) In the configuration of any one of the above-mentioned items (1) to (5), it is preferred that a multistage combustion burner be used as the burner. When multistage combustion is performed as described above, the temperature of the flame is decreased. Hence, a concentration of nitrogen oxides in the exhaust gas can be decreased. In particular, when gas is supplied into the melting furnace by using an exhaust device of an exhaust gas treatment facility, the concentration of nitrogen oxides in the exhaust gas is more liable to increase. Thus, the effect of the multistage combustion in reducing the concentration of nitrogen oxides in the exhaust gas becomes more noticeable.

(7) In the configuration of any one of the above-mentioned items (1) to (6), it is preferred that, in the melting step, a batch layer corresponding to the glass raw materials supplied into the melting furnace and a foam layer formed along with heating and melting of the glass raw materials cover 80% to 100% of a surface of a molten glass.

As described above, the batch layer and the foam layer cover 80% to 100% of the surface of the molten glass, and hence the surface of the molten glass is adequately covered with heat insulating layers. Thus, heat dissipation from the surface of the molten glass can be reduced to thereby improve energy efficiency.

(8) In the configuration of any one of the above-mentioned items (1) to (7), it is preferred that a batch layer corresponding to the glass raw materials supplied into the melting furnace cover 20% to 70% of a surface of a molten glass.

As described above, when the batch layer, which also functions as the heat insulating layer, covers 20% to 70% of the surface of the molten glass, the heat dissipation from the surface of the molten glass can be reduced to thereby improve the energy efficiency. Further, with setting of an area to be covered by the batch layer to 70% or less, even when an in-furnace condition has changed due to, for example, a change in flow rate and hence the glass raw materials are more liable to stagnate, feeding of the glass raw materials can be continued by causing the batch layer to flow over a region that has not been covered with the batch layer. Thus, the molten glass can be continuously generated in a stable manner.

(9) According to the present invention which has been devised to solve the problem described above, there is provided a manufacturing apparatus for a glass article, comprising: a burner configured to burn fuel to form a flame; a melting furnace configured to heat and melt glass raw materials through combustion caused by the burner; a hydrocarbon fuel supply device configured to supply a hydrocarbon fuel to the burner as the fuel; and a hydrogen fuel supply device configured to supply a hydrogen fuel to the burner as the fuel.

In the above-mentioned manner, the same action and effect as those obtained in the corresponding configuration that has already been described can be obtained.

Advantageous Effects of Invention

According to the present invention, $CO_2$ contained in the exhaust gas generated in the melting step can be reduced.

Brief Description of Drawings

FIG. 1 is one example of a longitudinal sectional view of a melting furnace.
FIG. 2 is a sectional view taken along the line A-A of FIG. 1.
FIG. 3 is a combustion system diagram of a burner included in the melting furnace of FIG. 2.
FIG. 4 is another example of the longitudinal sectional view of the melting furnace.
FIG. 5 is a graph for showing a relationship between a water vapor partial pressure and a water amount in glass in an example of the present invention.

Description of Embodiments

Now, a manufacturing method for a glass article according to an embodiment of the present invention is described with reference to the attached drawings.

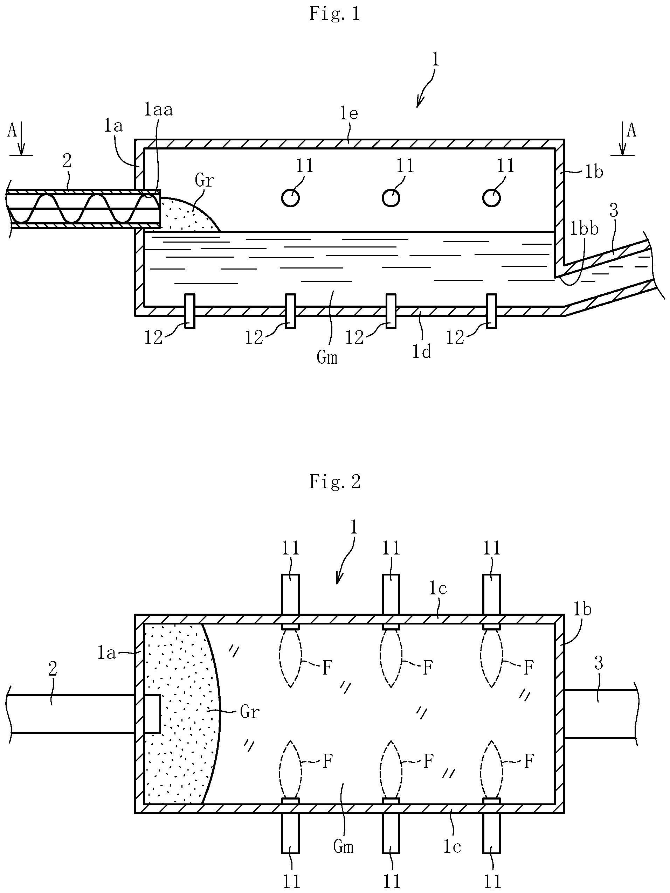

A manufacturing apparatus for a glass article to be used for the manufacturing method comprises a melting furnace 1 as illustrated in FIG. 1. The manufacturing apparatus further comprises, as required, a fining chamber, a homogenization chamber (stirring chamber), and a forming device. In the fining chamber, a fining treatment is performed on a molten glass generated in the melting furnace 1. In the homogenization chamber, the molten glass, which has been subjected to the fining treatment, is stirred. The forming device is configured to form the molten glass, which has been subjected to a steering treatment, into a glass article.

The melting furnace 1 is a space for performing a melting step of obtaining a molten glass Gm. As illustrated in FIG. 1 and FIG. 2, the melting furnace 1 continuously melts glass raw materials (besides natural raw materials and chemical raw materials, cullet may be included) Gr to form the molten glass Gm.

A feed port 1aa for feeding the glass raw materials Gr is formed in a front wall 1a of the melting furnace 1. A screw feeder 2 serving as a raw material supply part is provided to the feed port 1aa. The raw material supply part may be other publicly-known member such as a pusher or a vibrating feeder. The number or positions of arrangement of raw material supply parts can be appropriately changed depending on, for example, a size of the melting furnace 1.

An outflow port 1bb for discharging the molten glass Gm is formed in a rear wall 1b of the melting furnace 1. A transfer pipe 3 is connected to the outflow port 1bb, and the molten glass Gm is successively supplied to a downstream side. When glass articles are simultaneously manufactured at a plurality of locations, a plurality of outflow ports 1bb may be formed in the melting furnace 1 so that the molten glass Gm is supplied to the downstream side through the transfer pipes 3 connected to the outflow ports 1bb, respectively.

In the melting furnace 1, a melting space in the furnace is partitioned with a wall part formed of a refractory brick (e.g., a zirconia-based electrocast brick, an alumina-based electrocast brick, an alumina-zirconia-based electrocast brick, an AZS (Al-Zr-Si)-based electrocast brick, or a dense fired brick).

A plurality of burners 11, each being configured to burn fuel to form a flame F, are provided to each of side walls 1c of the melting furnace 1 on both sides. The flame F formed by each of the burners 11 heats the glass raw materials Gr and/or the molten glass Gm from a position above a liquid surface of the molten glass Gm. The number or positions of arrangement of the burners 11 can be appropriately changed depending on, for example, the size of the melting furnace 1.

A plurality of rod-shaped electrodes 12 are provided to a bottom wall 1d of the melting furnace 1. The electrodes 12 heat the molten glass Gm through application of a current under a state in which the electrodes 12 are immersed in the molten glass Gm. The number (one or two or more) or positions of arrangement of the electrodes 12 can be appropriately changed depending on, for example, the size of the melting furnace 1. Further, sheet-shaped electrodes may be used in place of the rod-shaped electrodes 12, and the electrodes 12 may be arranged on the side walls 1c in place of the bottom wall 1d. In this embodiment, the molten glass Gm and/or the glass raw materials Gr is/are heated by using both of the burners 11 and the electrodes 12. However, it is not always required that the electrodes 12 be provided. In view of improvement of energy efficiency, however, it is preferred that the electrodes 12 be also used so as to curtail outputs of the burners 11.

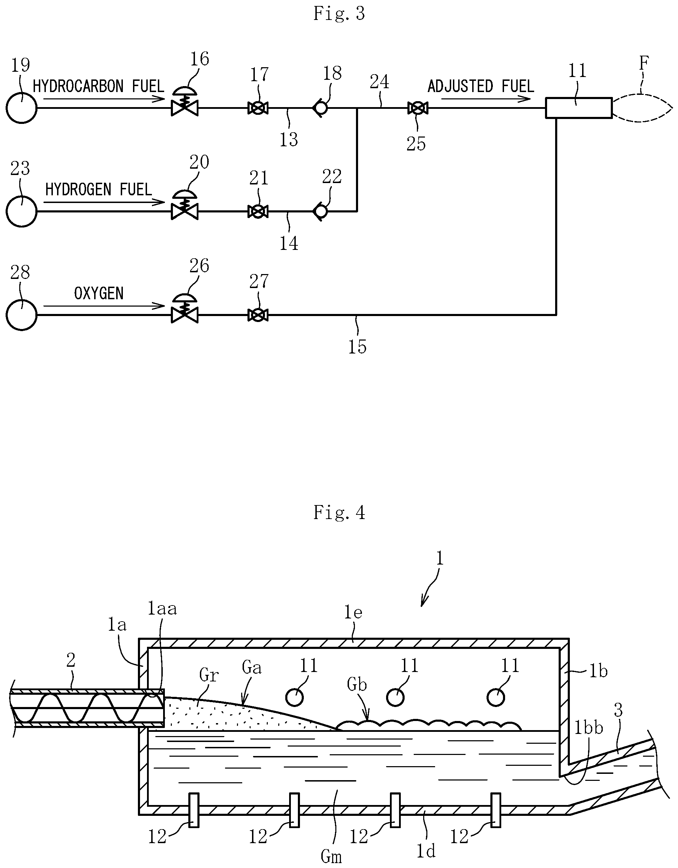

As illustrated in FIG. 3, pipes for supplying, for example, fuel are connected to each of the burners 11. The pipes comprise a first fuel pipe 13, a second fuel pipe 14, and a combustion-supporting gas pipe 15. The first fuel pipe 13 allows supply of a hydrocarbon fuel. The second fuel pipe 14 allows supply of a hydrogen fuel. The combustion-supporting gas pipe 15 allows supply of oxygen serving as a combustion-supporting gas.

A flow rate adjustment valve 16, a switching valve 17, and a check valve 18 are provided to the first fuel pipe 13. The flow rate adjustment valve 16 is configured to adjust a flow rate of the hydrocarbon fuel. The switching valve 17 is configured to switch opening and closing of a flow passage for the hydrocarbon fuel flowing at the adjusted flow rate. The check valve 18 is configured to prevent backflow of fuel such as the hydrocarbon fuel. A hydrocarbon fuel source 19 is connected to an upstream end of the first fuel pipe 13. As the hydrocarbon fuel, for example, butane, propane, a petroleum gas, or a natural gas can be used. In view of further reduction of $CO_2$ contained in an exhaust gas, it is preferred that a natural gas be used as the hydrocarbon fuel.

A flow rate adjustment valve 20, a switching valve 21, and a check valve 22 are provided to the second fuel pipe 14. The flow rate adjustment valve 20 is configured to adjust a flow rate of the hydrogen fuel. The switching valve 21 is configured to switch opening and closing of a flow passage for the hydrogen fuel flowing at the adjusted flow rate. The check valve 22 is configured to prevent backflow of fuel such as the hydrogen fuel. A hydrogen fuel source 23 is connected to an upstream end of the second fuel pipe 14.

A downstream end of the first fuel pipe 13 and a downstream end of the second fuel pipe 14 are connected to each other and are connected to the burner 11 through intermediation of a common fuel pipe 24. An adjusted fuel flows through the common fuel pipe 24. The adjusted fuel contains the hydrocarbon fuel and the hydrogen fuel at a mixing ratio adjusted by the flow rate control valves 16 and 20 and/or the switching valves 17 and 21. A switching valve 25 is provided to the common fuel pipe 24. The switching valve 25 is configured to switch opening and closing of a flow passage for the adjusted fuel.

A flow rate adjustment valve 26 and a switching valve 27 are provided to the combustion-supporting gas pipe 15. The flow rate adjustment valve 26 is configured to adjust a flow rate of oxygen. The switching valve 27 is configured to switch opening and closing of a flow passage for oxygen flowing at the adjusted flow rate. An oxygen source 28 is connected to an upstream end of the combustion-supporting gas pipe 15. The burner 11 is connected to a downstream end of the combustion-supporting gas pipe 15. The supply of oxygen to the burner 11 through the combustion-supporting gas pipe 15 allows mixture of the adjusted fuel with oxygen to make the adjusted fuel more easily combustible. As a result, a temperature of the flame F formed by the burner 11 is easily raised. Air may be used in place of oxygen as the combustion-supporting gas. Further, when oxygen is used as the combustion-supporting gas, an oxygen concentration can be set to 50% by mass or higher, preferably 70% by mass or higher, more preferably 90% by mass or higher. As the oxygen concentration increases, the fuel becomes more easily combustible. Hence, the temperature of the flame formed by the burner is easily raised, and a water amount in the molten glass can be increased.

In this embodiment, a hydrocarbon fuel supply device configured to supply the hydrocarbon fuel to the burner 11 comprises the hydrocarbon fuel source 19, the first fuel pipe 13, and the common fuel pipe 24. Further, in this embodiment, a hydrogen fuel supply device configured to supply the hydrogen fuel to the burner 11 comprises the hydrogen fuel source 23, the second fuel pipe 14, and the common fuel pipe 24. Configurations of the hydrocarbon fuel supply device and the hydrogen fuel supply device are not limited to those described above. In the hydrocarbon fuel supply device and the hydrogen fuel supply device, for example, the common fuel pipe 24 may be omitted so that the first fuel pipe 13 and the second fuel pipe 14 are directly connected to the burner 11.

It is preferred that each of the burners 11 be a multistage combustion burner. The multistage combustion burner comprises, for example, a main nozzle and a staging nozzle (not shown). The main nozzle is configured to inject a mixed gas of, for example, the fuel and the combustion-supporting gas. The staging nozzle is configured to inject the combustion-supporting gas. The mixed gas injected from the main nozzle is obtained by mixing the fuel and the combustion-supporting gas so that the combustion-supporting gas is insufficient for the fuel. Thus, a large part of the fuel contained in the mixed gas injected from the main nozzle reacts with the combustion-supporting gas contained in the mixed gas and combusts. The remaining fuel reacts with the combustion-supporting gas injected from the staging nozzle and combusts. When the multistage combustion described above is used, the flame becomes longer and a temperature of the flame decreases. As a result, a concentration of nitrogen oxides in the exhaust gas can be reduced.

Next, the manufacturing method for a glass article using the manufacturing apparatus having the above-mentioned configuration is described.

This manufacturing method comprises the melting step as described above. The manufacturing method further comprises, as required, a fining step of performing a fining treatment on the molten glass obtained in the melting step, a homogenization step of stirring the molten glass that has undergone the melting step, and a forming step of forming the molten glass that has undergone the homogenization step into glass articles.

As illustrated in FIG. 1 and FIG. 2, in the melting step, the glass raw materials Gr are heated and molten in the melting furnace 1 by using the burners 11, each being configured to burn the fuel to form the flame F. In this embodiment, in view of the improvement of energy efficiency or the like, heating through the application of a current with the electrodes 12 is also performed in the melting step. However, it is not always required that the heating through the application of a current with the electrodes 12 be performed.

Here, as illustrated in FIG. 4, a batch layer Ga and a foam layer Gb may cover a surface of the molten glass Gm. The batch layer Ga corresponds to the glass raw materials Gr supplied into the melting furnace 1. The foam layer Gb is formed along with heating and melting of the glass raw materials Gr. The foam layer Gb is formed along with, for example, the generation of gas, such as a carbonic acid gas ($CO$ or $CO_2$), an $O_2$ gas, or an $SO_2$ gas, from the glass raw materials Gr. In FIG. 4, the surface of the molten glass Gm is covered with the batch layer Ga and the foam layer Gb. However, the batch layer Ga may be situated on the foam layer Gb that covers the surface of the molten glass Gm. It is preferred that the batch layer Ga and the foam layer Gb cover 80% to 100%, more preferably 90% to 100%, further preferably 95% to 100% of the surface of the molten glass Gm. In this manner, the surface of the molten glass Gm is adequately covered with the batch layer Ga and the foam layer Gb, which also function as heat insulating layers. Thus, heat dissipation from the surface of the molten glass Gm can be reduced to thereby improve the energy efficiency.

Further, it is preferred that the batch layer Ga cover 20% to 70% of the surface of the molten glass Gm, more preferably 50% to 70% of the surface of the molten glass Gm. In this manner, the batch layer Ga, which also functions as the heat insulating layer, can reduce the heat dissipation from the surface of the molten glass Gm to thereby improve the energy efficiency. Further, even when a condition inside the melting furnace 1 has changed due to, for example, a change in flow rate and hence the glass raw materials Gr are more liable to stagnate, the glass raw materials Gr can be continuously fed by causing the batch layer Ga to flow over a region that has not been covered with the batch layer Ga. Thus, the molten glass Gm can be continuously generated in a stable manner.

As illustrated in FIG. 3, the hydrocarbon fuel and the hydrogen fuel are used in combination as the fuel (adjusted fuel) to be supplied to the burners 11. In the melting step, it is preferred that a ratio of use between the hydrocarbon fuel and the hydrogen fuel be adjusted. In this embodiment, the ratio of use between the hydrocarbon fuel and the hydrogen fuel is adjusted by changing a mixing ratio between the hydrocarbon fuel and the hydrogen fuel, which are to be supplied to the burners 11. Thus, production efficiency for glass articles can be desirably maintained while $CO_2$ in the exhaust gas generated in the melting step is being reduced.

The mixing ratio between the hydrocarbon fuel and the hydrogen fuel may be the same for or different among the burners 11.

In this embodiment, the melting step comprises a step of adjusting the water amount in the molten glass Gm by adjusting the ratio of use between the hydrocarbon fuel and the hydrogen fuel. Specifically, when the water amount in the molten glass Gm is lower than a reference value, the mixing ratio of the hydrogen fuel is increased. When the water amount in the molten glass Gm is higher than the reference value, the mixing ratio of the hydrocarbon fuel is increased. In this manner, the water amount in the molten glass Gm is adjusted so as to fall within a predetermined range.

The water amount in the molten glass Gm can be evaluated based on, for example, β-OH of the glass articles manufactured from the molten glass Gm. Thus, it is preferred that this manufacturing method comprise a step of measuring the water amount in the glass articles. In this case, in the melting step, for example, the ratio of use between the hydrocarbon fuel and the hydrogen fuel is adjusted based on a result of measurement of the water amount in the glass articles to thereby adjust the water amount in the molten glass Gm.

The embodiment of the present invention has been described. However, the embodiment of the present invention is not limited to that described above, and various changes are possible without departing from the gist of the present invention.

In the embodiment described above, description has been given of a case in which the ratio of use between the hydrocarbon fuel and the hydrogen fuel is adjusted by changing the mixing ratio between the hydrocarbon fuel and the hydrogen fuel, which are to be supplied to the burners 11. However, a method of changing the ratio of use is not limited to the case described above. For example, an output of the burner supplied with only the hydrocarbon fuel as the fuel and/or an output of the burner supplied with only the hydrogen fuel as the fuel may be changed. Alternatively, the number of burners supplied with only the hydrocarbon fuel as the fuel and/or the number of burners supplied with only the hydrogen fuel as the fuel may be changed.

The glass article to be formed by the forming device may be, for example, a glass sphere, a glass tube, a glass block, a glass fiber, a sheet glass, a glass roll, or the like, or may have any other appropriate shapes.

In this embodiment described above, the melting step comprises a step of adjusting the water amount in the molten glass Gm or the glass articles by adjusting the ratio of use between the hydrocarbon fuel and the hydrogen fuel. However, not only the adjustment of the ratio of use between the hydrocarbon fuel and the hydrogen fuel but also another method may be used in the step of adjusting the water amount. The adjustment of the ratio of use between the hydrocarbon fuel and the hydrogen fuel and another method may be used in combination.

A method of supplying gas (for example, an atmospheric air, a dry air, a clean dry air, oxygen, or the like) into the melting furnace may be used as another method. With this method, an atmosphere in the melting furnace is discharged by supplying gas into the melting furnace in the melting step. Thus, a water vapor partial pressure in the melting furnace is decreased. As a result, the water amount in the molten glass Gm or the glass articles is reduced. More specifically, when the amount of supply of gas is increased or the supply of gas is started, the water amount in the molten glass Gm or the glass articles can be reduced. When the amount of supply of gas is decreased or the supply of gas is stopped, the water amount in the molten glass Gm or the glass articles can be increased. The gas may be supplied into the melting furnace along with the discharge of the atmosphere in the melting furnace by using the exhaust device of the exhaust gas treatment facility.

Further, a method of increasing and decreasing the amount of gas generated from the glass raw materials may be used as another method. With this method, the amount of gas generated from the glass raw materials is increased and decreased to thereby change the water vapor partial pressure in the melting furnace. In this manner, the water amount in the molten glass Gm or the glass articles is adjusted. For example, when the glass raw materials containing carbonates (for example, $CaCo_3$) are used, carbon dioxide is generated along with heating and melting of the glass raw materials. Along with the generation of carbon dioxide, the water vapor partial pressure in the melting furnace is decreased to thereby decrease the water amount in the molten glass Gm or the glass articles.

Example

Now, the manufacturing method for a glass article according to the present invention is described based on an example. The following example is a mere exemplification, and the present invention is not limited to the following example by any means.

In this example, comparison tests were conducted so as to examine how a water amount in glass was changed when the glass raw materials were molten while a mixing ratio (ratio of use) between a natural gas and hydrogen, which were to be burned with the burners, was changed. In the comparison tests, oxygen having an oxygen concentration of 99% by mass or higher was used as the combustion-supporting gas. The other conditions for the comparison tests are as follows.

(1) Test 1

In Test 1, in order to melt the glass raw materials, fuel consisting only of a natural gas was supplied to the burners to cause combustion. Heating through application of a current with the electrodes was also performed.

(2) Test 2

In Test 2, in order to melt the glass raw materials, fuel obtained by mixing a natural gas and hydrogen so that a ratio between a heat generation amount from combustion of the natural gas and a heat generation amount from combustion of hydrogen became 1:1 was supplied to the burners to cause combustion. Heating through application of a current with the electrodes was also performed.

(3) Test 3

In Test 3, in order to melt the glass raw materials, fuel consisting only of hydrogen was supplied to the burners to cause combustion. Heating through application of a current with the electrodes was also performed.

Conditions common to Tests 1 to 3 are as follows. A ceiling temperature of the melting furnace was set to 1,300°C. A flow rate of the molten glass was set constant. A heat amount of the burners and a heat generation amount of the electrodes were set equal to each other.

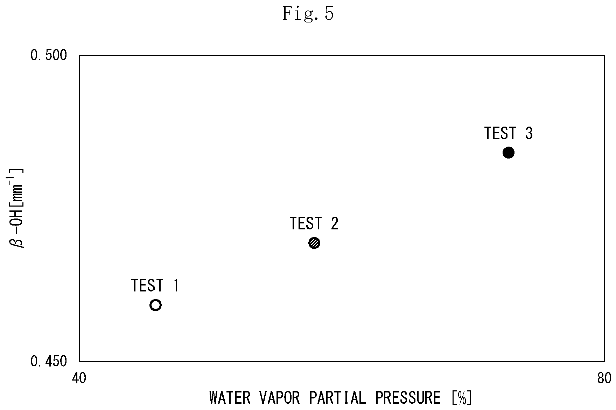

In each of Tests 1 to 3, the water vapor partial pressure and the water amount in glass were measured at the time of combustion. The results thereof are shown in FIG. 5. In FIG. 5, a horizontal axis represents the water vapor partial pressure, and a vertical axis represents the water amount ($\beta$-OH) in glass. The water amount was evaluated based on $\beta$-OH ($mm^{-1}$) of sheet-shaped samples. The sheet-shaped samples were manufactured by melting the glass raw materials and then collecting the molten glass. Herein, "$\beta$-OH" refers to a value obtained by measuring a transmittance of the glass with a Fourier transform infrared spectrometer (FTIR) and using the following equation.

$$\beta-OH=(1/X)\log 10(T_1/T_2)$$

X: thickness (mm) of sheet-shaped sample
$T_1$: transmittance (%) at a reference wavelength of 3,846 $cm^{-1}$
$T_2$: minimum transmittance (%) around a hydroxyl group absorption wavelength of 3,600 $cm^{-1}$

It can be verified also from FIG. 5 that the water amount in glass and the water vapor partial pressure both increased along with a rise in the mixing ratio (ratio of use) of the hydrogen fuel to the natural gas fuel. Because of the presence of $CO_2$ generated from the molten glass and air sucked into the melting furnace, the water vapor partial pressure did not reach 100% even in Test 3 (fuel consisting only of hydrogen).

Reference Signs List

1  melting furnace
2  screw feeder
11  burner
12  electrode
13  first fuel pipe
14  second fuel pipe
15  combustion-supporting gas pipe
16  flow rate adjustment valve
17  switching valve
18  check valve

19  hydrocarbon fuel source
20  flow rate adjustment valve
21  switching valve
22  check valve
23  hydrogen fuel source
24  common fuel pipe
25  switching valve
26  flow rate adjustment valve
27  switching valve
28  oxygen source
F  flame
Gm  molten glass
Gr  glass raw material
Ga  batch layer
Gb  foam layer

**Claims**

1. A manufacturing method for a glass article, comprising a melting step of heating and melting glass raw materials in a melting furnace by using a burner configured to burn fuel to form a flame,
wherein a hydrocarbon fuel and a hydrogen fuel are used in combination as the fuel.

2. The manufacturing method for a glass article according to claim 1, wherein the melting step comprises a step of adjusting a ratio of use between the hydrocarbon fuel and the hydrogen fuel.

3. The manufacturing method for a glass article according to claim 2, wherein the melting step comprises adjusting a water amount in a molten glass generated by melting the glass raw materials, by adjusting the ratio of use between the hydrocarbon fuel and the hydrogen fuel.

4. The manufacturing method for a glass article according to claim 2, wherein the melting step comprises adjusting a water amount in the glass article by adjusting the ratio of use between the hydrocarbon fuel and the hydrogen fuel.

5. The manufacturing method for a glass article according to any one of claims 1 to 4, wherein the burner is supplied with oxygen as a combustion-supporting gas.

6. The manufacturing method for a glass article according to any one of claims 1 to 4, wherein a multistage combustion burner is used as the burner.

7. The manufacturing method for a glass article according to any one of claims 1 to 4, wherein, in the melting step, a batch layer corresponding to the glass raw materials supplied into the melting furnace and a foam layer formed along with heating and melting of the glass raw materials cover 80% to 100% of a surface of a molten glass.

8. The manufacturing method for a glass article according to any one of claims 1 to 4, wherein a batch layer corresponding to the glass raw materials supplied into the melting furnace covers 20% to 70% of a surface of a molten glass.

9. A manufacturing apparatus for a glass article, comprising:

a burner configured to burn fuel to form a flame;
a melting furnace configured to heat and melt glass raw materials through combustion caused by the burner;
a hydrocarbon fuel supply device configured to supply a hydrocarbon fuel to the burner as the fuel; and
a hydrogen fuel supply device configured to supply a hydrogen fuel to the burner as the fuel.

Fig. 1

Fig. 2

Fig. 3

19 — HYDROCARBON FUEL 16
17 18 24 ADJUSTED FUEL 11 F
13 25

23 — HYDROGEN FUEL 20
21 22
14

28 — OXYGEN 26
27
15

Fig. 4

1

1aa 1e
1a 1

2 Gr Ga 11 11 11
Gb 1b

12 12 12 12 1bb 3
Gm 1d

Fig.5

## INTERNATIONAL SEARCH REPORT

| International application No. |
| --- |
| **PCT/JP2023/014675** |

| A. | CLASSIFICATION OF SUBJECT MATTER |
| --- | --- |

*C03B 5/235*(2006.01)i
    FI:  C03B5/235

According to International Patent Classification (IPC) or to both national classification and IPC

| B. | FIELDS SEARCHED |
| --- | --- |

Minimum documentation searched (classification system followed by classification symbols)

    C03B5/235

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 04-231328 A (AIR PROD. AND CHEM. INC.) 20 August 1992 (1992-08-20) claims, paragraphs [0003], [0030]-[0048], fig. 1-2 | 1-6 |
| Y | | 7-9 |
| X | JP 2020-508951 A (L'AIR LIQUIDE, SOCIETE ANONYME POUR L'ETUDE ET L'EXPLOITATION DES PROCEDES GEORGES CLAUDE) 26 March 2020 (2020-03-26) claims, paragraphs [0042], [0057]-[0058], [0090], fig. 1-7 | 1-6 |
| Y | JP 2016-052964 A (ASAHI GLASS CO., LTD.) 14 April 2016 (2016-04-14) claims, fig. 1-5 | 7-8 |
| Y | JP 2010-513181 A (GDF SUEZ) 30 April 2010 (2010-04-30) claims, fig. 1-8 | 9 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 July 2023** | **18 July 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/014675**

| Patent document cited in search report | | | Publication date (day/month/year) | Patent family member(s) | | | Publication date (day/month/year) |
|---|---|---|---|---|---|---|---|
| JP | 04-231328 | A | 20 August 1992 | EP | 464603 | A2 | |
| | | | | claims, columns 1, 5-13, fig. 1-2 | | | |
| | | | | US | 5057133 | A | |
| | | | | BR | 9102722 | A | |
| | | | | KR | 10-1992-0002478 | A | |
| | | | | CN | 1059323 | A | |
| JP | 2020-508951 | A | 26 March 2020 | WO | 2018/140684 | A1 | |
| | | | | claims, paragraphs [0041], [0056]-[0057], [0089], fig. 1-7 | | | |
| | | | | US | 2018/0215641 | A1 | |
| | | | | CN | 110366660 | A | |
| JP | 2016-052964 | A | 14 April 2016 | CN | 105384325 | A | |
| | | | | KR | 10-2016-0028374 | A | |
| | | | | TW | 201615567 | A | |
| JP | 2010-513181 | A | 30 April 2010 | US | 2010/0050691 | A1 | |
| | | | | claims, fig. 1-8 | | | |
| | | | | WO | 2008/074961 | A2 | |
| | | | | FR | 2909994 | A1 | |
| | | | | CN | 101588995 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011136086 A